# EUROPÄISCHE PATENTSCHRIFT

(11) **EP 1 952 093 B1**
(45) Veröffentlichungstag und Bekanntmachung des Hinweises auf die Patenterteilung: **23.03.2011**
(21) Anmeldenummer: 06828520.4
(22) Anmeldetag: 17.11.2006
(51) Int. Cl.: G01C 19/06, G01C 9/24

(54) **NEIGUNGSSENSOR**
INCLINATION SENSOR
DETECTEUR D'INCLINAISON

(30) Priorität: 23.11.2005 DE 102005056120; 29.11.2005 DE 102005056736
(43) Veröffentlichungstag der Anmeldung: 06.08.2008
(73) Patentinhaber: SARTORIUS AG, 37075 Göttingen (DE)
(72) Erfinder: KLAPPER, Franz, 07929 Saalburg-Ebersdorf (DE); RINK, Herbert, 37085 Göttingen (DE); FREYDANK, Gerd, 37081 Göttingen (DE)
(74) Vertreter: Liedtke, Markus
(86) Internationale Anmeldenummer: PCT/DE2006/002015
(87) Internationale Veröffentlichungsnummer: WO 2007/059736

(56) Entgegenhaltungen:
- DE-A1- 19 854 812
- FR-A1- 2 868 834
- GB-A- 2 113 383
- GB-A- 2 238 382
- US-A1- 5 761 818

## Beschreibung

Die Erfindung betrifft einen Neigungssensor mit einer Libelle, welche in einem Gehäuse unter einem Deckglas eine Flüssigkeit und eine Gasblase aufweist, wobei oberhalb des Deckglases eine Lichtquelle angeordnet ist.

Zum horizontalen oder vertikalen Ausrichten von Apparaturen wie beispielsweise Messinstrumenten werden üblicherweise Libellen eingesetzt. Eine Gasblase in einer abgeschlossenen Flüssigkeit zeigt dabei die Ausrichtung der Libelle an. Die Gasblase befindet sich stets am höchsten Punkt der Flüssigkeit. Die Libelle wird so mit der Apparatur verbunden, dass sich die Gasblase ausschließlich im ausgerichteten Zustand der Apparatur an einer definierten Stelle der Libelle befindet. Der ausgerichtete Zustand kann mit Hilfe der Libelle mit geringem Aufwand hergestellt oder wiederhergestellt werden. Es muss sich nicht zwangsläufig um einen horizontal oder vertikal ausgerichteten Zustand der Apparatur handeln. Prinzipiell kann durch entsprechend verkippte Anordnung der Libelle an der Apparatur jeder beliebige Neigungswinkel für den ausgerichteten Zustand vorgegeben werden.

Befindet sich die Gasblase an der definierten Stelle, so wird sie im Sinne der Erfindung als zentriert bezeichnet

Zum Zweck einer verbesserten Empfindlichkeit kann die Libelle an ihrer Oberseite mit einem innen konkaven Deckglas versehen sein. Die Empfindlichkeit hängt dann unter anderem vom Krummungsradius des Deckglases ab.

Im Stand der Technik sind auch bereits Anordnungen bekannt, mit denen Libellen elektronisch abgelesen werden können. Dazu werden in der Regel fotoelektrische Prinzipien herangezogen. Die Mehrzahl der bekannten Anordnungen basiert auf dem Durchleuchten einer Libelle, wobei eine Lichtquelle und ein Lichtempfänger auf gegenüberliegenden Seiten der Libelle, insbesondere auf der Ober- und der Unterseite, angeordnet sind.

Beispielsweise ist in DE 39 38 848 A1 ein Neigungssensor beschrieben, der eine herkömmliche Röhrenlibelle enthält, deren Gehäuse aus einem für Licht durchlässigem Material besteht und deren Innenraum mit einer Flüssigkeit gefüllt ist, die eine Gasblase umschließt. Über der Röhrenlibelle ist eine Lichtquelle angeordnet, die die gesamte Länge der Röhrenlibelle ausleuchtet. Das von der Lichtquelle ausgehende Licht tritt durch das transparente Gehäuse und durch die ebenfalls lichtdurchlässige Flüssigkeit wie auch durch die Gasblase. Auf der der Lichtquelle gegenüber liegenden Seite der Libelle entsteht eine ungleichförmige Lichtverteilung, die auf einem darunter angeordneten Fotodetektor ausgewertet wird. Solche Vorrichtungen sind aufwendig, nehmen einen großen Bauraum ein und erfordern in der Regel speziell aufgebaute Libellen. Nachteilig sind vor allem die geringen Helligkeitsunterschiede des auszuwertenden Lichtflecks infolge der geringen Transmissionsunterschiede von Gasblase und Flüssigkeit sowie die verwaschenen Konturen des Lichtflecks, die durch Reflexions- und Streuerscheinungen an den optischen Grenzflächen verursacht werden. Die Erfassung der Position des Lichtflecks ist deshalb mit großen Unsicherheiten behaftet.

Nach DE 36 34 244 A1 ist ein optoelektronischer Neigungssensor mit einem Strahlungssender und einem Strahlungsdetektor bekannt, bei dem Strahlungssender und Strahlungsdetektor oberhalb eines lichtreflektierenden Mediums angeordnet sind, wobei die Neigung durch Reflexion an einer lichtreflektieren Flüssigkeit, vorzugsweise an einem Quecksilberspiegel erfasst wird. Die Flüssigkeit ist in einer Kapselung eingeschlossen, welche von der Flüssigkeit nur und nur teilweise ausgefüllt wird.
Die Detektion der Lage einer Gasblase ist mit dieser Anordnung nicht möglich.

Ferner ist aus JP 10 227 635 A ein Neigungssensor bekannt, bei welchem eine Lichtquelle und ein Lichtempfänger auf derselben Seite einer Libelle angeordnet sind, nämlich oberhalb des Deckglases. Dieser Neigungssensor nutzt das Prinzip der Totalreflexion. Wenn die Libelle horizontal ausgerichtet ist, die Gasblase also im Sinne der Erfindung zentriert ist, wird von der Lichtquelle auf die Gasblase fallendes Licht an der Grenzfläche zwischen dem optisch dichteren Deckglas und der optisch dünneren Gasblase in Richtung auf den Lichtempfänger totalreflektiert. Mittels des Lichtempfängers ist das im zentrierten Fall totalreflektierte Licht detektierbar. Ist die Gasblase dezentriert, so findet keine Totalreflexion und somit kein Lichteinfall auf den Lichtempfänger statt. Es kann somit anhand des detektierbaren Lichtes festgestellt werden, ob die Gasblase zentriert ist oder nicht. Dies dient als binäre Aussage über eine horizontale, vertikale oder eine andere vorbestimmte Ausrichtung einer Apparatur.
Dieser Neigungssensor hat den Nachteil, dass die Richtung und der Grad der Neigung nicht ermittelt werden kann. Eine automatische Ausrichtung einer mit einem solchen Neigungssensor versehenen Apparatur nicht möglich.

In der FR-A1-2 868 834 wird ein Neigungssensor beschrieben, bei dem sich in einem Gehäuse eine Flüssigkeit und ein Luftabschnitt befinden, wobei unterhalb des Gehäuses eine Lichtquelle und vier Lichtempfänger angeordnet sind. Das von der Lichtquelle ausgesendete Licht wird an der Grenzfläche Flüssigkeit-Luftabschnitt totalreflektiert und mittels der Lichtempfänger detektiert, wobei mittels der Lichtempfänger unterschiedliche Lichtmengen detektierbar sind, aus denen Aussagen über die Neigung der Anordnung gewonnen werden können.

Aus der US 5,761,818 ist ein Neigungssensor bekannt, der eine Libelle zur Messung der Neigung eines Objektes, eine LED zur Erzeugung eines Bildes der Libelle und eine Fotodiodenanordnung zum Abtasten des Bildes der Libelle und zur Erzeugung eines Signals der Libelle entsprechend der Neigung der Vorrichtung enthält.

Die DE 198 54 812 A1 beschreibt eine Winkelmessvorrichtung zum Erfassen von Winkelabweichungen gegenüber einer Bezugslage mit einer in einem Träger angeordneten, in der Bezugslage horizontal ausgerichteten Libelle, die mit einer optisch transparenten Flüssigkeit gefüllt ist und in die eine Gasblase eingebracht ist.

Aus der GB 2 113 383 A ist ein Neigungssensor bekannt, der sich innerhalb eines mit einer Flüssigkeit gefüllten Behälters befindet. Innerhalb des Behälters ist eine Strahlungsquelle befestigt und mindestens ein die Strahlung empfangender Detektor.

Der Erfindung liegt die Aufgabe zugrunde, einen Neigungssensor der eingangs genannten Art anzugeben, mit dem Richtung und Grad einer Neigung mit hoher Genauigkeit ermittelbar sind, und der für eine automatische Ausrichtung einer mit einem solchen Neigungssensor versehenen Apparatur geeignet ist

Die Aufgabe wird erfindungsgemäß gelöst durch einen Neigungssensor, welcher die in Anspruch 1 angegebenen Merkmale aufweist.

Vorteilhafte Ausgestaltungen der Erfindung sind Gegenstand der Unteransprüche.

Es wird vorgeschlagen, oberhalb des Deckglases eine Lichtquelle und mindestens zwei Lichtempfänger so anzuordnen, dass von der Lichtquelle ausgehendes und bei zentrierter Gasblase an der Gasblase totalreflektiertes Licht mittels dieser wenigstens zwei Lichtempfänger detektierbar ist, wobei bei unzentrierter Gasblase mittels dieser Lichtempfänger unterschiedliche Lichtmengen detektierbar sind. Mit Hilfe von zwei oder vorzugsweise mehr Lichtempfängern kann die Lage der Gasblase und damit ihre Abweichung von der zentrierten Lage nicht nur dem Grade nach, sondern auch der Richtung nach mit hoher Genauigkeit ermittelt werden. Dies kann insbesondere für ein automatisches Ausrichten einer mit dem erfindungsgemäßen Neigungssensor versehenen Apparatur genutzt werden. Das Ermitteln der Neigungsrichtung ist mit genau zwei Lichtempfänger lediglich in einer Dimension möglich. Die Lichtquelle und die Lichtempfänger sind auf einem gemeinsamen Chipsubstrat angeordnet. Auf diese Weise ist eine kompakte Bauform mit geringem Kostenaufwand möglich.

In einer bevorzugten Ausfiihrungsform sind mindestens vier Lichtempfänger so um die Lichtquelle angeordnet, dass von der Lichtquelle ausgehendes und bei zentrierter Gasblase an der Gasblase totalreflektiertes Licht mittels dieser wenigstens vier Lichtempfänger detektierbar ist. Vorzugsweise sind die vier Lichtempfänger flächig so ausgebildet, dass sie alle Quadranten einer Ebene abdecken. Vier Lichtempfänger ermöglichen das Ermitteln der Neigungsrichtung in zwei Dimensionen mit hoher Genauigkeit. Mit einer höheren Anzahl von Lichtempfängern, beispielsweise acht Stück, die alle Oktanten einer Ebene abdecken, kann die Richtungsbestimmung in zwei Dimensionen weiter verfeinert werden.

Eine kompakte Bauweise des Neigungssensors sowie eine hohe Genauigkeit der Messung werden ermöglicht, indem die Lichtquelle bei zentrierter Gasblase zentral über der Gasblase angeordnet ist.

Erfindungsgemäß ist das Chipsubstrat vorzugsweise mit seiner funktionellen Seite auf dem Deckglas oder auf einem Glassubstrat, das mit dem Deckglas eine optische Einheit bildet, angeordnet. Diese Alternativen ermöglichen mit geringem Aufwand einen funktionsbedingten Abstand der Lichtquellen-Lichtempfänger-Einheit von der Gasblase.

Das Ermitteln der Neigung ist mit geringem Aufwand möglich, wenn die Abstände zwischen der Lichtquelle und jedem der Lichtempfänger im wesentlichen übereinstimmen. Die Lichtempfänger liefern dann bei einer dem Grade nach bestimmten Auslenkung der Gasblase für alle Auslenkungsrichtungen symmetrische Lichtmengensignale, wenn die Lichtempfänger übereinstimmende Eigenschaften hinsichtlich der Fläche und Empfindlichkeit aufweisen.

Eine hohe Genauigkeit der Messung einer Auslenkung entlang einer virtuellen Linie ist mit einer Ausführungsform möglich, bei der zumindest einer der weiteren Lichtempfänger bezüglich der Lichtquelle im wesentlichen gegenüber dem ersten Lichtempfänger angeordnet ist. Dadurch sind die symmetrischen Signale der gegenüberliegenden Lichtempfänger maximal gespreizt. Bei einer Ausführungsform mit vier Lichtempfängern liegen diese einander vorzugsweise in zwei Paaren gegenüber. So kann eine Superposition zweier virtueller Auslenkungslinien für eine vollständige Bestimmung der zweidimensionalen Auslenkung der Gasblase genutzt werden.

In einer besonderen Ausgestaltung sind die Lichtempfänger in einer zum Deckglas parallelen Ebene entlang jeweiligen virtuellen, durch die Lichtquelle und den betreffenden Lichtempfänger verlaufenden Linie segmentiert, wobei totalreflektiertes Licht mittels dieser Segmente unabhängig von den jeweiligen anderen Segmenten detektierbar ist. Insbesondere können bei einer rotationssymmetrischen Anordnung der Lichtempfänger um die Lichtquelle die Lichtempfänger radial segmentiert sein. So kann die Genauigkeit der Ermittlung des Neigungsgrades erhöht werden.

Eine verbesserte Genauigkeit lässt sich mit einer Ausgestaltung erreichen, in welcher unterhalb der Lichtquelle und beabstandet von dieser ein lichtabsorbierender Bereich angeordnet ist, dessen Durchmesser kleiner ist als derjenige der Gasblase, wobei er für die Totalreflexion geeignetes Licht nicht einschränkt. Auf diese Weise lässt sich Streulicht, das auf nicht totalreflektiertes Licht zurückzuführen ist, vermeiden.

Vorteilhafterweise ist hierbei der lichtabsorbierende Bereich unterhalb des Deckglases angebracht. Eine Anordnung zwischen der Unterseite des Deckglases und der Lichtquelle ist ebenfalls möglich. Je höher der lichtabsorbierende Bereich angeordnet ist, desto kleiner muss sein Durchmesser gewählt werden, so dass noch Licht von der Lichtquelle auf die zentrierte Gasblase fallen kann.

In einer vorteilhaften Ausführungsform weist das Gehäuse auf der Innenseite eine lichtabsorbierende Oberfläche auf. Dadurch wird Streulicht von nicht totalreflektiertem, durch die Flüssigkeit hindurchtretendem Licht verhindert.

Ausführungsbeispiele der Erfindung werden im Folgenden anhand von Zeichnungen näher erläutert.

Darin zeigen:
- Figur 1: einen Neigungssensor im Querschnitt,
- Figur 2: dessen Chipsubstrat in Draufsicht und
- Figur 3: Strahlenverläufe zwischen einer Lichtquelle und einem Lichtempfän- ger zur Verdeutlichung des Funktionsprinzips.

Einander entsprechende Teile sind in allen Figuren mit den gleichen Bezugszeichen versehen.

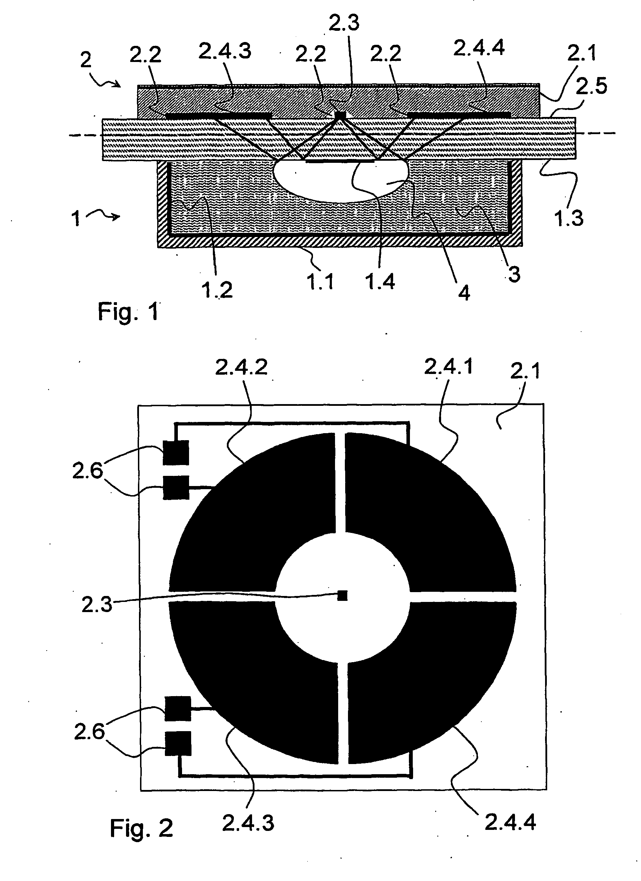

Die Figuren 1 und 2 zeigen einen erfindungsgemäßen Neigungssensor. Er setzt sich zusammen aus einer Libelle 1 und einem Messmodul 2.

Die Libelle 1 in Form einer Dosenlibelle weist ein Gehäuse 1.1 mit einer lichtabsorbierenden Oberfläche 1.2 auf der Innenseite auf. Eine solche Oberfläche 1.2 kann insbesondere durch Beschichtung erzeugt werden. Die Libelle weist einen Durchmesser von 12 mm auf. Das Gehäuse 1.1 ist an der Oberseite mit einem Deckglas 1.3 abgeschlossen, welches auf der Innenseite konkav gekrümmt ist und einen Brechungsindex n_{G}=1,50 aufweist. Die Krümmung ist im Zeichnungsmaßstab nicht erkennbar. Sie ist zweckmäßigerweise den Anforderungen an die Empfindlichkeit der Libelle 1 angepasst. Das Deckglas 1.3 ist an seiner Unterseite mit einem lichtabsorbierenden Bereich 1.4 versehen, in dem das Deckglas 1.3 geschwärzt ist. In das Gehäuse 1.1 ist als Flüssigkeit 3, die einen Brechungsindex n_{F} aufweist, beispielsweise Wasser mit n_{F}=1,33 einschließlich einer Gasblase 4 eingefüllt. Die Gasblase 4 enthält mit Wasser gesättigte Luft und weist einen Brechungsindex n_{L}=1,00 auf. Vorteilhafterweise kann statt Wasser eine Flüssigkeit 3 verwendet werden, bei der an Glas geringere Adhäsionskräfte auftreten. Für die Brechungsindexe gilt in jedem Fall: n_{G}>n_{F}>n_{L}. Im abgebildeten Zustand des Neigungssensors ist die Gasblase 4 zentriert. Bei Verkippung bewegt sie sich seitlich auf den Gehäuserand zu und wird so dezentriert.

Das Messmodul, 2 weist ein Chipsubstrat 2.1 mit oberflächlichen Vertiefungen 2.2 auf, in welche eine Lichtquelle 2.3 in Form einer LED und vier Lichtempfinger 2.4.1, 2.4.2, 2.4.3, 2.4.4 in Form von kreisringsegmentförmigen Fotodetektoren im wesentlichen entlang einer Ebene integriert sind. Die inneren Ränder der Kreisringsegmente, die vier Quadranten eines zweidimensionalen Raumes abdecken, sind 2,5 mm von der Lichtquelle 2.3 entfernt angeordnet. Die Vertiefungen 2.2 verhindern ein direktes Übersprechen von der Lichtquelle 2.3 zu den Lichtempfänger 2.4. Das Chipsubstrat 2.1 ist in Flip-Chip-Technik mit seiner funktionellen Seite nach unten auf einem Glassubstrat 2.5 als transparenter Schicht angebracht. Die elektrischen Leitungen zu den äußeren Anschlüssen 2.6 der Lichtquelle 2.3 beziehungsweise den Lichtempfängern 2.4 sind auf dem Glassubstrat 2.5 angeordnet und über Anschlussfelder (engl. "bumps") mit diesen verbunden. Der Anschluss der Lichtquelle 2.3 ist aus Gründen der Übersichtlichkeit nicht dargestellt. Der aus der Kontaktierung resultierende Hohlraum zwischen dem Chipsubstrat 2.1 und dem Glassubstrat 2.5 ist mit Füllmaterial versehen, dessen Brechungsindex und thermische Eigenschaften denjenigen des Glassubstrats 2.5 entsprechen.

In alternativen Ausgestaltungen ist es möglich, auf der Rückseite des Chipsubstrats 2.1 einen Träger mit entsprechenden Leitungsführungen anzuordnen, mit denen die Lichtquelle 2.3 und die Lichtempfänger 2.4 durch Bonden elektrisch verbunden werden.

Das Glassubstrat 2.5 ist mit dem Deckglas 1.3 der Libelle 1 verkittet. Die aus dem beiden Gläsern 1.3, 2.5 zusammengesetzte optische Einheit hat eine Dicke von 1,6 mm. Alternativ zur Unterseite des Deckglases 1.3 könnte ein lichtabsorbierender Bereich zwischen dem Glassubstrat 2.5 und dem Deckglas 1.3 angeordnet sein.

Das Glassubstrat 2.5 kann in besonderen Ausgestaltungen vollständig entfallen. Das Chipsubstrat 2.1 wird dann mit seiner funktionellen Oberseite, an der die Lichtquelle 2.3 und die Lichtempfänger 2.4 angeordnet sind, direkt auf das Deckglas 1.3 aufgebracht, so dass der funktionsbedingte Abstand zwischen Lichtquelle 2.3 und Gasblase 4 ausschließlich von dem Deckglas 1.3 gebildet wird.

Der fünktionsbedingte Abstand variiert insbesondere in Abhängigkeit der Anordnung der Lichtquelle 2.3 und der Lichtempfänger 2.4 sowie der Größe der Gasblase 4. Er gibt den Kegel der möglichen Einfallswinkel auf die Libelle und damit auch die Auffächerung des totalreffektierten Lichts vor. Der funktionsbedingte Abstand steht somit in Zusammenhang mit dem Abstand der Lichtempfänger 2.4 von der Lichtquelle 2.3 und der Fläche und der Empfindlichkeit der Lichtempfänger 2.4. Vorzugsweise wird ein Abstand im Bereich von 1,0 mm bis 2,0 mm, insbesondere 1,6 mm, gewählt.

In Figur 1 sind schematisch einige Strahlenverläufe von der Lichtquelle 2.3 zu zwei gegenüberliegenden Lichtempfängern 2.4 angedeutet, die aufgrund von Totalreflexion an der hier zentrierten Gasblase 4 zustandekommen. Es ist leicht erkennbar, dass sich bei einer Verschiebung der Gasblase 4 die beleuchteten Flächen beider Lichtempfänger 2.4 und damit beide von diesen abgegebenen Lichtmengensignale verändern. Besonders fein lässt sich der Grad einer solchen Auslenkung der Gasblase 4 ermitteln, wenn die Lichtempfänger 2.4 radial segmentiert sind und somit von jedem Lichtempfänger 2.4 mehrere Lichtmengensignale vorliegen. Allerdings ist bereits mit paarweise einander gegenüberliegenden, unsegmentierten Lichtempfänger 2.4 in der abgebildeten Form eine hohe Messgenauigkeit möglich, da für jede Auslenkungsrichtung zumindest zwei komplementäre integrierte Signale zur Verfügung stehen.

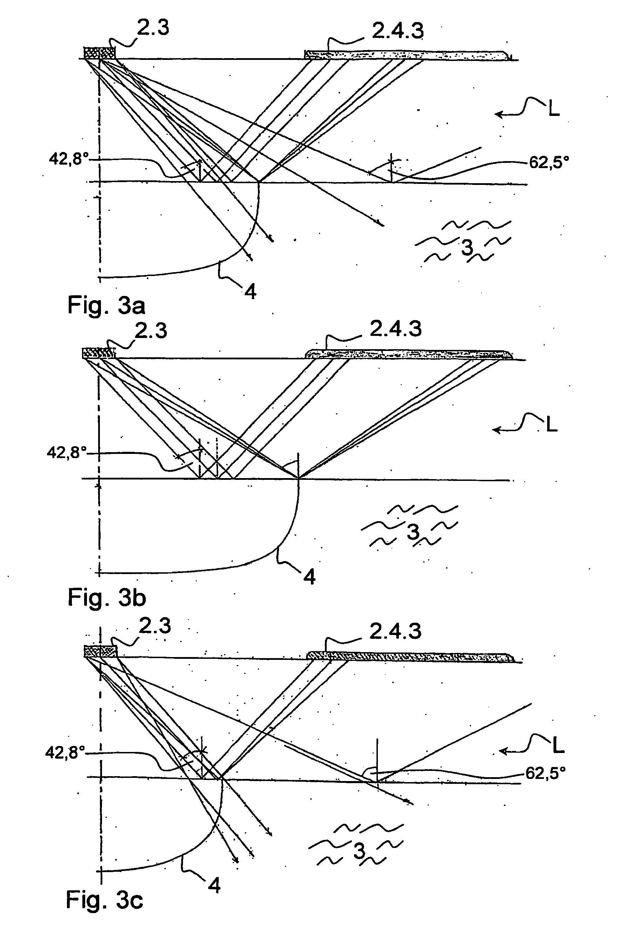

**Figur 3** zeigt Strahlenverläufe auf einer Seite einer Gasblase 4 im Detail. In Teilfigur 3a befinde sich die Gasblase 4 in zentrierter Lage. In Teilfigur 3b ist die Gasblase 4 in der Zeichenebene in Richtung des Empfänger 2.4.3 ausgelenkt. In Teilfigur 3c ist die Gasblase 4 in die entgegengesetzte Richtung ausgelenkt.

Die von der Lichtquelle 2.3 ausgehenden Lichtstrahlen L werden im Einfallsbereich des lichtabsorbierenden Bereichs 1.4 absorbiert, wodurch Streulicht aus unerwünschten Reflexionen, beispielsweise am Boden der Libelle 1, vermieden wird. Ein großer Teil der auf die Gasblase 4 treffenden Lichtstrahlen L wird an diesem optisch dünneren Medium, n_{G}>n_{L}, totalreffektiert und trifft daraufhin auf den Lichtempfänger 2.4.3. Zu steil auftreffende Lichtstrahlen L erfahren keine Totalreflexion und verlaufen durch die Gasblase 4 hindurch, bis sie am Grund der Libelle 1 absorbiert werden. Der Grenzwinkel ε_{L} der Totalreflexion an der Gasblase 4 bestimmt sich in diesem Fall aus:
s_{L}=arcsin n_{L/}n_{G}=-42,8°.

Für die an der Grenzfläche zwischen Deckglas 1.3 und Flüssigkeit 3 auftreffenden Lichtstrahlen L gilt wegen des geringeren Unterschiedes der Brechungsindexe (n_{G}>n_{F}>n_{L}) ein wesentlich größerer Grenzwinkel für die Totalreflexion: ε_{L}=arcsin n_{F}/n_{G} 62,5°. Sie treten daher zum großen Teil in die Flüssigkeit 4 ein und durch diese hindurch, wo sie beispielsweise am Gehäusegrund absorbiert werden, und werden lediglich zu einem geringen Teil totalreflektiert, um letztlich außerhalb des Lichtempfängers 2.4.3 auf das Chipsubstrat 2.1 zu treffen. Sie werden folglich nicht im Lichtempfänger 2.4.3 detektiert. Dies ermöglicht die Messung der Position der Gasblase 4 anhand der Lichtmengensignale der Lichtempfänger 2.4. Die Genauigkeit der Messung wird noch dadurch erhöht, dass die Lichtmenge am gegenüberliegenden Empfänger 2.4.1 etwa im selben Maße abnimmt. Dadurch kann aus vier Lichtempfängern 2.4 nicht nur der Grad der Auslenkung mit hoher Genauigkeit bestimmt werden, sondern auch die Richtung der Auslenkung.

Für eine einfache Auswertung der Lichtmengensignale kann vorteilhafterweise die Differenz der Lichtmengensignale gegenüberliegender Lichtempfänger 2.4 verwendet werden. Sie weist um die zentrierte Lage der Gasblase 4 einen breiten linearen Bereich für eine hohe Genauigkeit der Positions- und damit Neigungsbestimmung auf.

### BEZUGSZEICHENLISTE

- 1: Libelle
- 1.1: Gehäuse
- 1.2: Lichtabsorbierende Oberfläche
- 1.3: Deckglas
- 1.4: Lichtabsorbierender Bereich

- 2: Messmodul
- 2.1: Chipsubstrat
- 2.2: Vertiefung
- 2.3: Lichtquelle
- 2.4: Lichtempfänger
2.4.1 Erster Lichtempfänger
2.4.2 Zweiter Lichtempfänger
2.4.3 Dritter Lichtempfänger
2.4.4 Vierter Lichtempfänger
- 2.5: Glassubstrat
- 2.6: Anschluss

- 3: Flüssigkeit
- 4: Gasblase
- L: Lichtstrahl

## Patentansprüche

1. Neigungssensor mit einer Libelle (1), welche in einem Gehäuse (1.1) unter einem Deckglas (1.3) eine Flüssigkeit (3) und eine Gasblase (4) aufweist, wobei oberhalb des Deckglases (1.3) eine Lichtquelle (2.3) angeordnet ist, wobei oberhalb des Deckglases (1.3) mindestens zwei Lichtempfänger (2.4.1, 2.4.2...2.4.4) so angeordnet sind, dass von der Lichtquelle (2.3) ausgehendes und bei zentrierter Gasblase (4) an der Gasblase (4) totalreflektiertes Licht (L) mittels dieser wenigstens zwei Lichtempfänger (2.4.1, 2.4.2...2.4.4) detektierbar ist, wobei bei unzentrierter Gasblase (4) mittels dieser Lichtempfänger (2.4.1...2.4.4) unterschiedliche Lichtmengen detektierbar sind und die Lichtquelle (2.3) und die Lichtempfänger (2.4) auf einem gemeinsamen Chipsubstrat (2.1) angeordnet sind und dass das Chipsubstrat (2.1) mit seiner funktionellen Seite auf dem Deckglas (1.3) oder auf einem Glassubstrat (2.5), das mit dem Deckglas (1.3) eine optische Einheit bildet, angeordnet ist.

2. Neigungssensor nach Anspruch 1, **gekennzeichnet durch** mindestens vier Lichtempfänger (2.4), die so um die Lichtquelle (2.3) angeordnet sind, dass von der Lichtquelle (2.3) ausgehendes und bei zentrierter Gasblase (4) an der Gasblase (4) totalreflektiertes Licht (L) mittels dieser wenigstens vier Lichtempfänger (2.4.1, 2.4.2...2.4.4) detektierbar ist.

3. Neigungssensor nach Anspruch 1 oder 2, **dadurch gekennzeichnet, dass** die Lichtquelle (2.3) bei zentrierter Gasblase (4) zentral über der Gasblase (4) angeordnet ist.

4. Neigungssensor nach einem der vorhergehenden Ansprüche, **dadurch gekennzeichnet, dass** die Abstände zwischen der Lichtquelle (2.3) und jedem der Lichtempfänger (2.4) im Wesentlichen übereinstimmen.

5. Neigungssensor nach einem der vorhergehenden Ansprüche, **dadurch gekennzeichnet, dass** der weitere Lichtempfänger (2.4.2...2.4.4) bezüglich der Lichtquelle (2.3) im Wesentlichen gegenüber dem ersten Lichtempfänger (2.4.1) angeordnet ist.

6. Neigungssensor nach einem der vorhergehenden Ansprüche, **dadurch gekennzeichnet, dass** die Lichtempfänger (2.4) in einer zum Deckglas (1.3) parallelen Ebene entlang jeweiligen virtuellen, durch die Lichtquelle (2.3) und den betreffenden Lichtempfänger (2.4.1...2.4.4) verlaufenden Linien segmentiert sind, wobei totalreflektiertes Licht mittels dieser Segmente unabhängig von den jeweiligen anderen Segmenten detektierbar ist.

7. Neigungssensor nach einem der vorhergehenden Ansprüche, **dadurch gekennzeichnet, dass** unterhalb der Lichtquelle (2.3) und beabstandet von dieser ein lichtabsorbierender Bereich (1.4) angeordnet ist, dessen Durchmesser kleiner ist als derjenige der Gasblase (4), wobei er für die Totalreflexion geeignetes Licht nicht einschränkt.

8. Neigungssensor nach Anspruch 7, **dadurch gekennzeichnet, dass** der lichtabsorbierende Bereich (1.4) unterhalb des Deckglases (1.3) angebracht ist.

9. Neigungssensor nach einem der vorhergehenden Ansprüche, **dadurch gekennzeichnet, dass** das Gehäuse (1.1) auf der Innenseite eine lichtabsorbierende Oberfläche (2.6) aufweist.

## Claims

1. An inclination sensor with a spirit level (1) comprising a liquid (3) and a gas bubble (4) under a cover glass (1.3) in a housing, wherein a light source (2.3) is arranged above the cover glass (1.3), wherein at least two light receivers (2.4.1, 2.4.2...2.4.4) are arranged above the cover glass (1.3) in such a manner that, when the gas bubble (4) is centred, light (L) emitted by the light source (2.3) and totally reflected at the gas bubble (4) is detectable by means of these at least two light receivers (2.4.1, 2.4.2...2.4.4), wherein, when the gas bubble (4) is not centred, different quantities of light are detectable by means of these light receivers (2.4.1...2.4.4) and the light source (2.3) and the light receivers (2.4) are arranged on a shared chip substrate (2.1) and that the functional side of the chip substrate (2.1) is arranged on the cover glass(1.3) or on a glass substrate (2.5), which forms an optical unit with the cover glass (1.3).

2. The inclination sensor according to claim 1, **characterised in** at least four light receivers (2.4) being arranged around the light source (2.3) in such a manner that, when the gas bubble (4) is centred, light (L) emitted by the light source (2.3) and totally reflected at the gas bubble (4) is detectable by means of these at least four light receivers (2.4.1, 2.4.2...2.4.4).

3. The inclination sensor according to claim 1 or 2, **characterised in that**, when the gas bubble (4) is centred, the light source (2.3) is arranged centrally over the gas bubble(4).

4. The inclination sensor according to one of the preceding claims, **characterised in that** the distances between the light source (2.3) and each light receiver (2.4.) substantially coincide.

5. The inclination sensor according to one of the preceding claims, **characterised in that** the other light receiver (2.4.2...2.4,4) is substantially arranged opposite the first light receiver (2.4.1) with respect to the light source (2.3).

6. The inclination sensor according to one of the preceding claims, **characterised in that** the light receivers (2.4) are segmented in a plane parallel to the cover glass (1.3) along respective virtual lines passing through the light source (2.3) and the regarding light receiver (2.4.1...2.4.4), wherein totally reflected light is detectable by means of these segments independently of the respective other segments.

7. The inclination sensor according to one of the preceding claims, **characterised in that** a light-absorbing area (1.4) is arranged below the light source (2.3) in a manner that the light-absorbing area (1.4) is spaced from the light source (2.3), the diameter of the light-absorbing area (1.4) being smaller than the one of the gas bubble (4), wherein it does not limit light appropriate for the total reflection.

8. The inclination sensor according to claim 7, **characterised in that** the light-absorbing area (1.4) is arranged below the cover glass (1.3).

9. The inclination sensor according to one of the preceding claims, **characterised in that** the housing (1.1) comprises a light-absorbing surface (2.6) on its inner side.

## Revendications

1. Capteur d'inclinaison avec une nivelle (1), laquelle comprend, sous un verre protecteur (1.3) dans un boîtier (1.1), un liquide (3) et une bulle de gaz (4), une source lumineuse (2.3) et au moins deux récepteurs lumineux (2.4.1, 2.4.2 ...2.4.4) disposés au-dessus du verre protecteur (1.3) de manière à détecter la lumière (L) émise par la source lumineuse (2.3) et totalement réfléchie sur la bulle de gaz (4) en cas de bulle de gaz (4) centrée au moyen desdits deux récepteurs lumineux (2.4.1, 2.4.2 ...2.4.4) au moins, des quantités de lumière différenciés étant détectables en cas de bulle de gaz (4) non centrée au moyen desdits récepteurs lumineux (2.4.1 ...2.4.4), les récepteurs lumineux (2.4) étant disposés sur un substrat de puce (2.1) commun, et le substrat de puce (2.1) étant disposé par sa face fonctionnelle sur le verre protecteur (1.3) ou sur un substrat en verre (2.5), formant une unité optique avec le verre protecteur (1.3).

2. Capteur d'inclinaison selon la revendication 1, **caractérisé par** au moins quatre récepteurs lumineux (2.4), disposés autour de la source lumineuse (2.3) de manière à détecter la lumière (L) émise par la source lumineuse (2.3) et totalement réfléchie sur la bulle de gaz (4) en cas de bulle de gaz (4) centrée au moyen desdits quatre récepteurs lumineux (2.4.1, 2.4.2 ...2.4.4) au moins.

3. Capteur d'inclinaison selon la revendication 1 ou la revendication 2, **caractérisé en ce que** la source lumineuse (2.3) est disposée centralement au-dessus de la bulle de gaz (4) en cas de bulle de gaz (4) centrée.

4. Capteur d'inclinaison selon l'une des revendications précédentes, **caractérisé en ce que** les intervalles entre la source lumineuse (2.3) et chacun des récepteurs lumineux (2.4) correspondent sensiblement.

5. Capteur d'inclinaison selon l'une des revendications précédentes, **caractérisé en ce que** l'autre récepteur lumineux (2.4.2 ...2.4.4) est disposé sensiblement en vis-à-vis avec le premier récepteur lumineux (2.4.1) par rapport à la source lumineuse (2.3).

6. Capteur d'inclinaison selon l'une des revendications précédentes, **caractérisé en ce que** les récepteurs lumineux (2.4) sont segmentés sur un plan parallèle au verre protecteur (1.3) le long de chaque ligne virtuelle s'étendant par la source lumineuse (2.3) et le récepteur lumineux (2.4.1 ...2.4.4) correspondant, la lumière totalement réfléchie étant détectable au moyen de ces segments indépendamment des autres segments.

7. Capteur d'inclinaison selon l'une des revendications précédentes, **caractérisé en ce qu'**une zone d'absorption lumineuse (1.4) est disposée en dessous de la source lumineuse (2.3) et espacée de celle-ci, ladite zone d'absorption lumineuse ayant un diamètre inférieur à celui de la bulle de gaz (4) et ne limitant pas la lumière appropriée pour la réflexion totale.

8. Capteur d'inclinaison selon la revendication 9, **caractérisé en ce que** la zone d'absorption lumineuse (1.4) est appliquée en dessous du verre protecteur (1.3).

9. Capteur d'inclinaison selon l'une des revendications précédentes, **caractérisé en ce que** le boîtier (1.1) présente une surface d'absorption lumineuse (2.6) sur sa face intérieure.
